# EUROPEAN PATENT APPLICATION

(11) **EP 1 139 155 A2**
(43) Date of publication of application: **04.10.2001**
(21) Application number: 01106688.3
(22) Date of filing: 16.03.2001
(51) Int. Cl.: G02F 1/1339, G02F 1/1335

(54) **Liquid crystal display apparatus and method for manufaturing the same**

(30) Priority: 30.03.2000 JP 2000095947
(71) Applicant: SONY CORPORATION, Tokyo 141 (JP)
(72) Inventor: Nagasako, Naoki, c/o Sony Kokubu Corporation, Kokubu-shi, Kagoshima-ken (JP)
(74) Representative: MÜLLER & HOFFMANN Patentanwälte

(57) **Abstract**

In a liquid crystal display apparatus, a displacement of a pair of facing substrates of a liquid crystal panel upon superposition and a non-uniformity of a gap space between the pair of the substrates are prevented. Namely in the liquid crystal display apparatus of this invention, the pair of the facing substrates of the liquid crystal pane, namely a TFT substrate and a facing substrate, are made to put together with a seal part of a peripheral portion of the substrates, and at outside of an effective picture element area, those substrates are sealed together with a dot-shaped seal part or a linear seal part.

## Description

### BACKGROUND OF THE INVENTION

### 1. Field of the Invention

This invention relates to a liquid crystal display apparatus, and further this invention relates to a structure of a liquid crystal display apparatus having a TFT substrate and a micro-lens equipped substrates and to a method for manufacturing such liquid crystal display apparatus.

### 2. Description of the Related Art

Generally, in a liquid crystal display apparatus, an optical transmittance of a liquid crystal panel of the liquid crystal display apparatus changes in accordance with a double refraction factor of liquid crystal material and a gap space between two facing substrates of the liquid crystal panel. Accordingly when the gap space between these two facing substrates changes during a manufacturing process of the liquid crystal panel, an optical transmittance of the liquid crystal panel receives such influences as mentioned above, and accordingly an irregularity of a display image by the liquid crystal display apparatus tends to occur.

Therefore a certain technique is introduced in order to avoid the irregularity in the gap space between the two facing substrates in the manufacturing process of the liquid crystal panel. For example, in manufacturing the liquid crystal panel having a TFT substrate on which TFT (Thin Film Transistor) devices are formed and a CF (Color Filter) substrate on which a color filter are formed, spherical spacers such as polymer-based, glass-based or silica-based spherical spacers are dispersed between these two facing substrates of the liquid crystal panel. In addition, seal material for adhering these substrates of the liquid crystal panel contains spacers and fillers in order to prevent hardening shrinkage of the seal material.

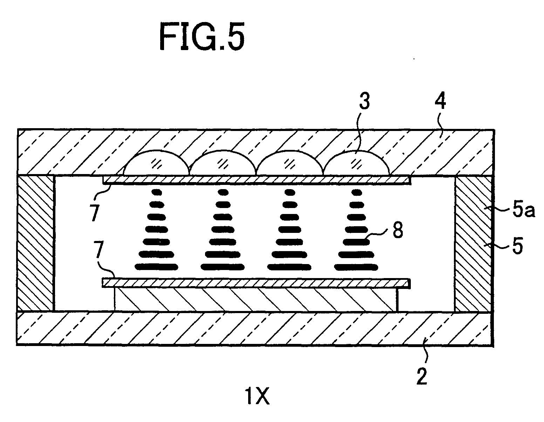

Further as shown in FIG. 5, in case of manufacturing a micro-lens type liquid crystal panel 1X having a TFT substrate 2 and a micro-lens 3 equipped facing substrate 4, glass-fiber mixed seal material 5 is coated on peripheral portion of either one of the TFT substrate 2 or the facing substrate 4 equipped with the micro-lens 3, and after that, both the TFT substrate 2 and the facing substrate 4 are superposed as to have an even gap space there-between in a conventional manufacturing method. The conventional micro-lens type liquid crystal panel 1X thus manufactured may have an irregularity of the gap space of about 10⁻⁷ m order depending on a point of measurement of the liquid crystal panel 1X.

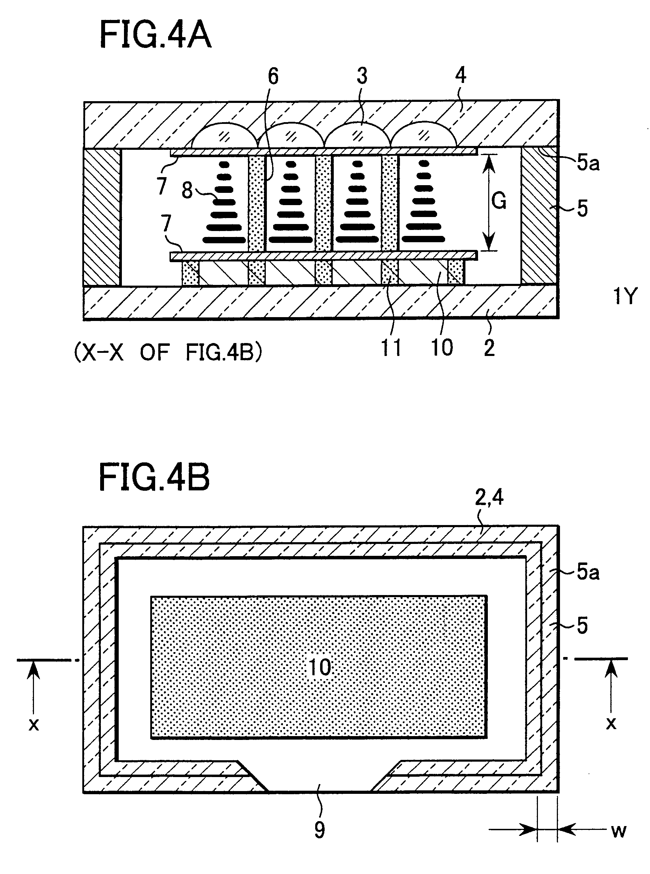

Accordingly on-chip spacers 6 are introduced on a TFT substrate 2 of a conventional micro-lens type liquid crystal panel 1Y as shown in FIG. 4A. In this case, a reference numeral 7 is an orientation film made of polyimide, a reference numeral 8 is a liquid crystal numerator made of TN (Twisted Nematic) liquid crystal material and a reference numeral 9 is an injection gate for the liquid crystal material in FIGs. 4A and 4B.

As the on-chip spacers 6 are formed at a shading area 11 made of a metal film within an effective picture element area 10 of the TFT substrate 2, so that a gap space G between the TFT substrate 2 and the facing substrate 4 of the effective picture element area 10 does not depend on stress to these substrates and is maintained to be constant.

However, in the micro-lens type liquid crystal panel 1Y as shown in FIGs. 4A and 4B, it is difficult to form the on-chip spacer 6 at outside of the effective picture element area 10, and accordingly the on-chip spacers 6 are not formed conventionally at the outside of the effective picture element area 10.

Therefore, in the outside area of the effective picture element area 10, namely at an area between a seal part 5a for the seal material 5 and the effective picture element area 10, either the TFT substrate 2 or the facing substrate 4 of the micro-lens type liquid crystal panel 1Y receives the stress, and accordingly there causes the irregularity of the gap space G.

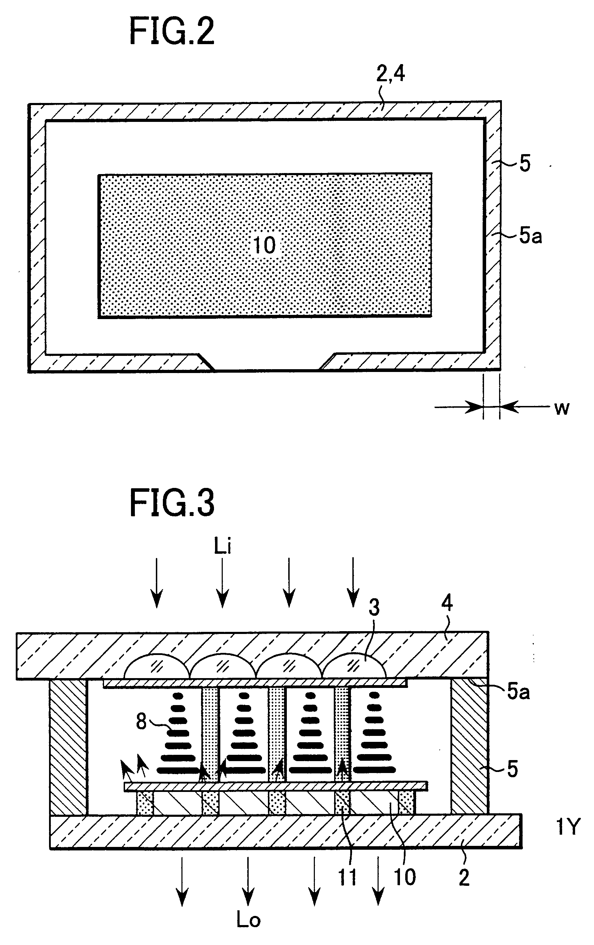

In addition, in the micro-lens type liquid crystal panel 1Y as shown in FIG. 3, if a displacement between the TFT substrate 2 and the micro-lens 3 equipped facing substrate 4 of the micro-lens type liquid crystal panel 1Y occurs upon superposing the two facing substrates 2 and 4, an incident light Li is reflected at the shading area 11 to cause loss of incident light Li, and accordingly a problem that occurs a loss of quantity of light of an outgoing beam Lo.

In order to prevent these displacement of the two facing substrates 2 and 4 of the micro-lens type liquid crystal panel 1Y, it is preferable to use the seal material 5 of low viscosity. However, if the seal material 5 of low viscosity is employed, there causes a problem such as so-called domain (residual image of a moving body) occurs or a leakage of the seal material 5 into the effective picture element area 10 occurs.

The other method for preventing the displacement of the two substrates 2 and 4 is to reduce the amount of the seal material 5 to be coated in order to get enough margin for the displacement and to seal the two substrates 2 and 4 at peripheral portion by narrowing a width W of the seal part 5a. However, when only the coating amount of the seal material 5 is decreased by narrowing a width W of the seal part 5a, the area where the TFT substrate 2 or the facing substrate 4 receives the stress becomes large at the outside of the effective picture element area 10. This causes deterioration of an irregularity of the gap space between the two substrates 2 and 4.

### SUMMARY OF THE INVENTION

It is a primary object of the present invention to provide a liquid crystal display apparatus having a construction for preventing a displacement of two facing substrates of a liquid crystal panel upon superposing these substrates and to maintain an appropriate gap space between the two facing substrates, and a method for manufacturing such liquid crystal display apparatus.

Namely, according to the present invention, it is found that a width of a seal part is narrowed by reducing a coating quantity of seal material in order to get an enough margin for a displacement of the two substrates upon superposing and the two substrates effectively sealed with a dot-type or a linear-type seal at an outside of an effective picture element area of the liquid crystal display panel in order to prevent the stress to such area of the two substrates.

Namely the present invention presents a liquid crystal display apparatus, in which two facing substrates of a liquid crystal panel are sealed at a seal part provided on peripheral portion of the facing substrates and these two facing substrates are sealed by a dot-shaped or a linear-shaped seal part at an outside of an effective picture element area.

In particular this invention is able to apply to a micro-lens type liquid crystal panel having on-chip spacers between a TFT (Thin Film Transistor) substrate and a micro-lens equipped facing substrate. Such micro-lens type liquid crystal panel of the present invention has dot-shaped or the linear-shaped seal parts as the outside seal part of the effective picture element area at an injection gate for liquid crystal material and at neighbor of corner parts of the effective image element area, and further the liquid crystal panel of this invention has the linear-shaped seal part along peripheral portion of the effective picture element area which is positioned opposite to the injection gate for liquid crystal material.

In addition, in a manufacturing method of a liquid crystal display apparatus of this invention, two facing substrates of a liquid crystal panel are sealed together at peripheral portion of the two facing substrates using seal material and further such seal material is coated in dot-shaped or linear-shaped form on outside and peripheral portion of the effective picture element area in addition.

In particular, in a process for fabricating a liquid crystal panel, a TFT substrate and a micro-lens equipped facing substrate are superposed and sealed together with seal material after providing on-chip spacers between these two substrates.

In case of coating the seal material on the outside of the effective picture element area, the seal material is coated in dot-shaped form at an injection gate for liquid crystal material and on neighbor of corner portions of the effective picture element area of the substrate and also coated in linear-shaped form at peripheral portion of the effective picture element area which is opposite to the injection gate for liquid crystal material.

### BRIEF DESCRIPTION OF THE DRAWINGS

In the accompanying drawings:
FIGs. 1A and 1B are a side sectional view and a plan view of a liquid crystal panel of a liquid crystal display apparatus in accordance with this invention;
FIG. 2 is a plan view of a micro-lens type liquid crystal panel having a narrowed seal part of a conventional liquid crystal display apparatus;
FIG. 3 is a side sectional view showing problems of a displacement of the conventional micro-lens type liquid crystal panel;
FIGs. 4A and 4B are a side sectional view and a plan view of a liquid crystal panel of a conventional liquid crystal display apparatus; and
FIG. 5 is a side sectional view of a conventional micro-lens type liquid crystal panel.

### DESCRIPTION OF THE PREFERRED EMBODIMENTS

This invention is explained in detail with reference to the attached drawings as follows. In the explanation, the same reference numeral in the drawings represents the equal or equivalent element.

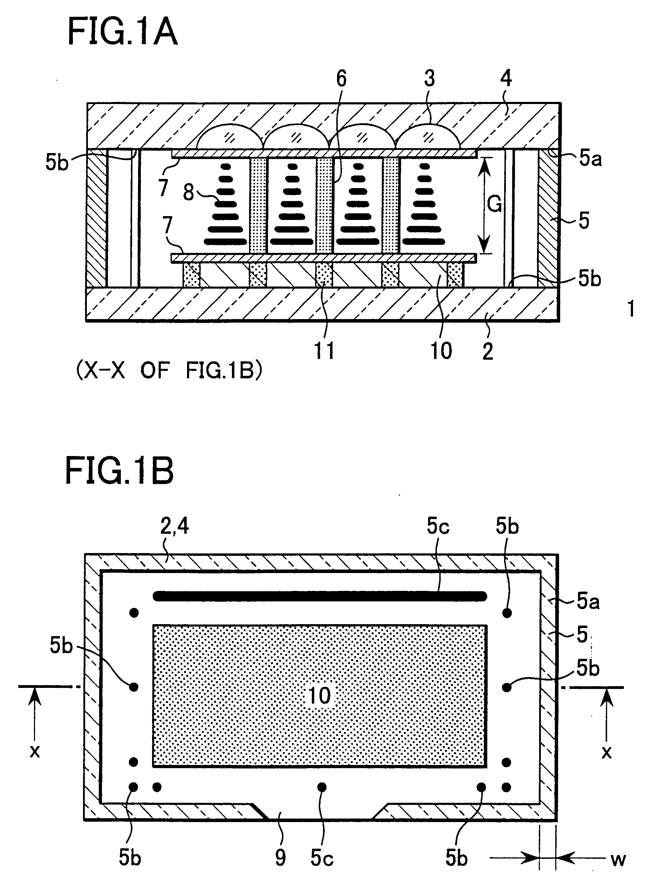

FIGs. 1A and 1B are a side sectional view and a plan view of a liquid crystal panel in a liquid crystal display apparatus of this invention, wherein the liquid crystal display apparatus includes a micro-lens type liquid crystal panel 1 comprised of on-chip spacers 6 between a TFT substrate 2 and a micro-lens equipped facing substrate 4. In this case, the TFT substrate 2 may include TFT (Thin Film Transistor) devices having active layers made of either poly-crystal silicon or amorphous silicon.

In this liquid crystal panel 1, the TFT substrate 2, the micro-lens equipped facing substrate 4 and the on-chip spacers 6 itself positioned between these substrates are constituted the same as a conventional micro-lens type liquid crystal panel, but according to the present invention, the TFT substrate 2 and the facing substrate 4 are superposed together at a seal part 5a at a peripheral portion of the two facing substrates 2 and 4, and further even at an outside of an effective image element area 10 (the area between the effective image element area 10 and the seal part 5a), the TFT substrate 2 and the facing substrate 4 are superposed and sealed together at a plurality of dot-shaped seal parts 5b or a linear-shaped seal part 5c. In this case, the micro-lens equipped facing substrate 4 means a substrate on which transparent resin having different refraction factors integrally formed on a facing plate to form a plurality of micro-lens in order to effectively use the incident light.

The micro-lens type liquid crystal panel 1 is fabricated by superposing and sealing the TFT substrate 2 and the micro-lens 3 equipped substrate 4 using the seal material 5. In this case the on-chip spacers 6, which are made of acryl resin and fabricated using a TFT fabrication processing, are formed in advance either one of the TFT substrate 2 or the micro-lens 3 equipped facing substrate 4 within the effective picture element area 10. After that the seal material 5 is coated not only on peripheral portion of the substrates but also on outside of the effective picture element area 10 in dot-shaped form or linear-shaped form, then the seal material 5 is stiffened.

In this case, a width W of the seal part 5a on the peripheral portion of the substrate is narrowed to 0.7 to 1.2 mm at the seal part 5a by reducing the coating amount of the seal material 5 in order to obtain enough margin for the displacement of the two substrates 2 and 4.

In addition, the dot-shaped seal part 5b or the linear-shaped seal part 5c in the outside of the effective picture element area are provided for reducing the gap space between the substrates 2 and 4, more concretely one of the dot-shaped seal part 5a is provided at a space where the on-chip spacer 6 is not positioned in the injection gate for liquid crystal material 9, three of the dot-shaped seal part 5a are provided at a neighbor of two corners of the injection gate for liquid crystal material 9 side of the effective picture element area 10, one of the dot-shaped seal part Sb is respectively provided at neighbor of two corners opposite to the injection gate for liquid crystal material 9 side of the effective picture element area 10, one of the dot-shaped seal part 5b is respectively provided there-between and a linear-shaped seal part 5c is provided at a space opposite to the injection gate for liquid crystal material 9 and along an edge of the effective picture element area 10.

Although there is no restriction about size of these dot-shaped seal part 5b and the linear-shaped seal part 5c, a diameter of each dot-shaped seal part 5b is preferably 0.5 to 1.2 mm and a width of the linear-shaped seal part 5c is preferably 0.5 to 1.2 mm and a length thereof is 15 to 35 mm in a standpoint of reducing coating amount of the seal material 5, but those dimensions depend on the size of the liquid crystal panel as to cover 90% of peripheral portion of the liquid crystal panel.

In order to stably maintain a predetermined gap space G between the two substrates, filling materials to be such as glass fiber or plastic micro-particle are preferably mixed into epoxy-based or acryl-based thermosetting adhesive or ultraviolet curing adhesive as the seal material used to form the seal part 5a, the dot-shaped seal parts 5b and the linear-shaped seal part 5c of the two substrates. Such filling materials become support posts for the gap space G. In this case, coating process for such seal material is done by painting , dispersal systems and so on.

In a liquid crystal display apparatus of this invention, a liquid crystal panel is not limited to one illustrated in FIGs. 1A and 1B. For example, size, the number and position of the dot-shaped seal parts 5b and the linear-shaped seal part 5c provided at the outside of the effective picture element area depend on a design of a TFT substrate or characteristics of a liquid crystal panel itself and may be changed or adjusted.

In addition, the liquid crystal panel 1 having the on-chip spacers 6 are explained in FIGs. 1A and 1B, but this invention can be applied to a liquid crystal panel having spherical spacers between TFT and CF facing substrates. Namely, seal material is coated not only on the peripheral part of one the two substrates but also coated on spaces between the effective picture element area in dot-shaped or linear-shaped form. After that these two substrates are superposed together. In this case, the resultant liquid crystal panel is to have dot-shaped or linear-shaped seal part at the outside of the effective picture element area besides on the peripheral portion of the substrate.

## Claims

1. A liquid crystal display apparatus comprising:
a liquid crystal panel having a pair of substrates facing to each other; and
liquid crystal material sealed between said pair of substrates, wherein
said pair of substrates being sealed not only at a first seal portion located at peripheral portion of said substrates but also sealed at dot-shaped and/or linear-shaped second seal portion located outside of an effective picture element area.

2. The liquid crystal display apparatus as cited in Claim 1, wherein
said liquid crystal panel is a micro-lens type liquid crystal display panel having a TFT substrate, a micro-lens equipped facing substrate and on-chip spacers there-between.

3. The liquid crystal display apparatus as cited in Claim 1, wherein
said second seal portion includes said dot-shaped seal portions at neighbor of corners of said effective picture element area and an injection gate for liquid crystal material and further includes said linear-shaped seal part located opposite to said injection gate for liquid crystal material and extending along an edge of the effective picture element area.

4. A manufacturing method of a liquid crystal display apparatus having a liquid crystal display panel, comprising the steps of:
superposing a pair of facing substrates to form said liquid crystal display panel; and
injecting liquid crystal display material between said pair of facing substrates, wherein
a first seal material is coated on periphery of said pair substrates, and
a second seal material is coated in dot-shaped and/or linear-shaped form at portions located at outside of an effective picture element area of said liquid crystal display panel.

5. The manufacturing method of a liquid crystal display apparatus as cited in Claim 4, wherein
said pair substrates are a TFT substrate and a micro-lens equipped facing substrate, and
said pair of substrates are superposed and sealed after forming on-chip spacers there-between.

6. The manufacturing method of a liquid crystal display apparatus as cited in Claim 4 or Claim 5, wherein
said second seal material is not only coated in dot-shaped form at neighbor of corners of said effective picture element area and an injection gate for liquid crystal material but also coated in linear-shaped form and extended along an edge of the effective picture element area at a portion located opposite to said injection gate for liquid crystal material.
